# EUROPÄISCHE PATENTSCHRIFT

(11) **EP 2 136 954 B1**
(45) Veröffentlichungstag und Bekanntmachung des Hinweises auf die Patenterteilung: **04.05.2011**
(21) Anmeldenummer: 08708370.5
(22) Anmeldetag: 29.01.2008
(51) Int. Cl.: B23D 45/12, B23D 59/00, B23D 21/04, B23D 33/12

(54) **ROHRTRENNVORRICHTUNG**
PIPE SEPARATOR DEVICE
DISPOSITIF DE SECTIONNEMENT DE TUYAU

(30) Priorität: 21.03.2007 DE 102007013503
(43) Veröffentlichungstag der Anmeldung: 30.12.2009
(73) Patentinhaber: Illinois Tool Works Inc., Glenview, IL 60026-1215 (US)
(72) Erfinder: SCHNEIDER, Achim, 78315 Radolfzell (DE)
(74) Vertreter: Meissner, Bolte & Partner
(86) Internationale Anmeldenummer: PCT/EP2008/051053
(87) Internationale Veröffentlichungsnummer: WO 2008/113633

(56) Entgegenhaltungen:
- EP-A2- 0 453 747
- DE-A1- 10 352 890

## Beschreibung

Die Erfindung betrifft eine Rohrtrennvorrichtung gemäß dem Oberbegriff von Anspruch 1. Eine solche Rohrtrennvorrichtung ist aus der DE 103 52 890 A1 (=US 2005/0,097,752 A1) bekannt.

Rohrtrennvorrichtungen, für welche die Erfindung insbesondere vorteilhaft ist, sind beispielsweise aus folgenden Schriften bekannt:
CH 372 202. und DE 101 34 269 B4.

Diese bevorzugten Rohrtrennvorrichtungen schließen jedoch die Verwendung der Erfindung für andere Rohrtrennvorrichtungen nicht aus, wie sie beispielsweise aus folgenden Schriften bekannt sind:
DE 100 20 393 A1, US 4,890,385, US 6,065,212.

Das Trennwerkzeug ist meistens ein Kreissägeblatt, so dass dessen Trennkante durch die Sägezähne gebildet ist. Das Trennwerkzeug kann jedoch auch eine Trennschleifscheibe sein, deren Außenumfang die Trennkante bildet.

Bevor von einem Rohr eine vorbestimmte Rohrlänge abgetrennt wird, wird das Rohr an der gewünschten Trennstelle markiert, beispielsweise mittels eines Bleistiftes, eines Farbstiftes, eines Kratzwerkzeuges oder eines anderen optischen Markierungsmittels. Danach wird das Rohr in der Rohraufnahmeöffnung derart positioniert, dass die Rohrmarkierung mit der Trennkante des Trennwerkzeuges radial fluchtet. Hierbei kann die Rohrmarkierung mit dem axial vorderen oder hinteren Ende der Trennkante des Trennwerkzeuges radial fluchtend angeordnet werden, oder axial mittig, je nach dem, welcher Rohrabschnitt eine bestimmte Länge haben soll und wie dementsprechend die Markierung auf dem Rohr angebracht wurde. Bei der Positionierung der Markierung des Rohres relativ zum Trennwerkzeug besteht in der Praxis häufig das Problem, dass die Rohrmarkierung innerhalb der Rohrtrennvorrichtung nicht oder nur ungenau sichtbar ist oder nur von einer ungünstigen Position der Bedienperson sichtbar ist. Dadurch kann eine Bedienperson häufig nur schätzen, wo sie die Rohrmarkierung positionieren muss, damit sie mit der Trennkante des Trennwerkzeuges radial fluchtet. Die richtige Positionierung ist dabei von der Erfahrung und der Geschicklichkeit der Bedienperson abhängig. Es ist verständlich, dass hierbei häufig falsche Rohrlängen von einem Rohr abgetrennt werden und dadurch häufig Rohrabfälle und Mehrfacharbeiten entstehen.

Durch die Erfindung soll die Aufgabe gelöst werden, die Benutzung von Rohrtrennvorrichtungen wirksamer zu gestalten.

Diese Aufgabe wird gemäß der Erfindung durch die Merkmale von Anspruch 1 gelöst.

Weitere Merkmale der Erfindung sind in den Unteransprüchen enthalten.

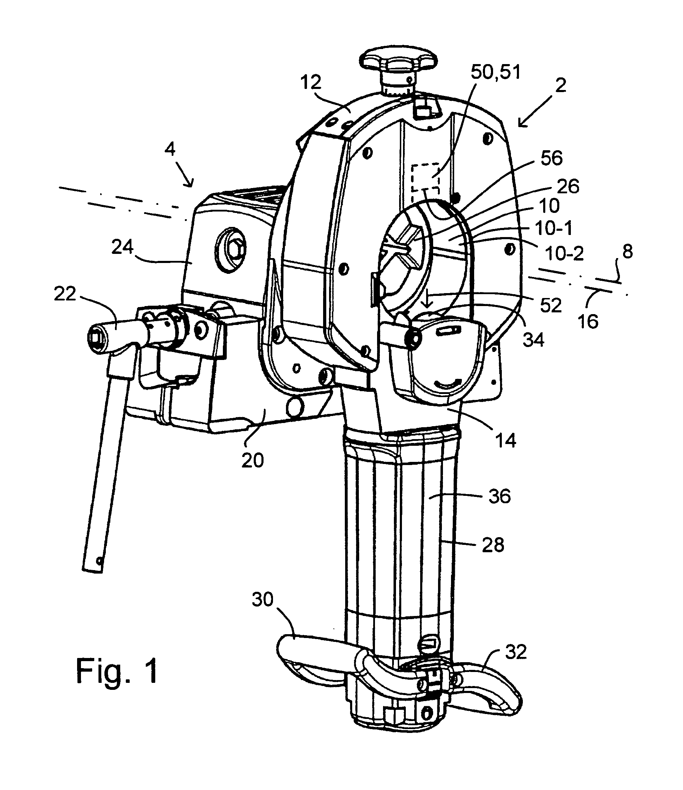

Die Erfindung wird im Folgenden mit Bezug auf die beiliegenden Zeichnungen anhand einer bevorzugten Ausführungsform als Beispiele beschrieben, ohne darauf beschränkt zu sein. In den Zeichnungen zeigen
- Fig. 1: perspektivisch eine Rohrtrennvorrichtung nach der Erfindung,

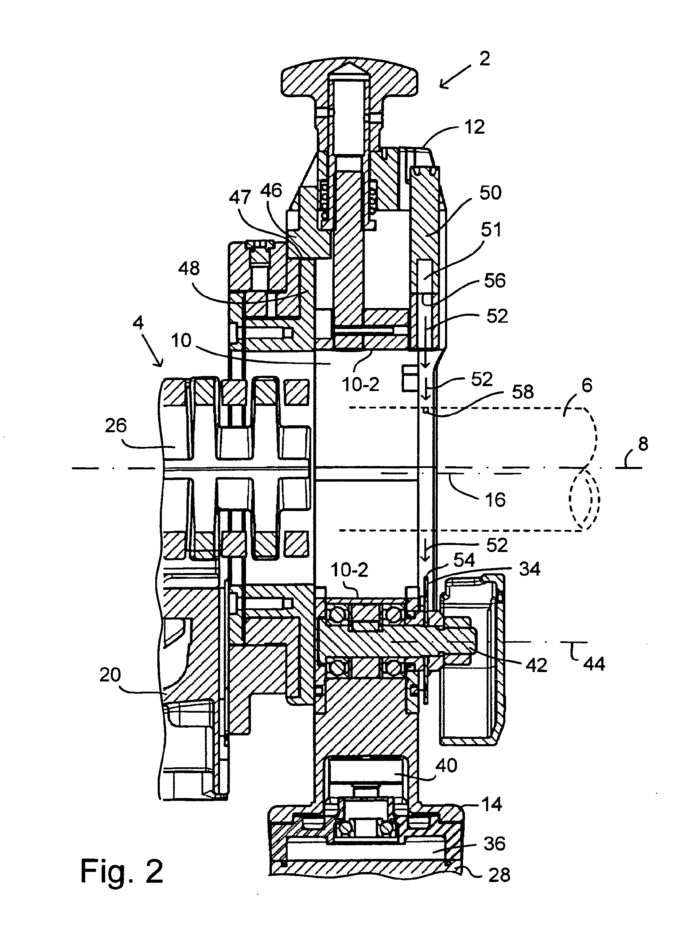

- Fig. 2: einen abgebrochenen vertikalen Axialschnitt der Rohrtrennvorrichtung von Fig. 1.

Die in den Zeichnungen dargestellte Rohrtennvorrichtung nach der Erfindung enthält eine Trennvorrichtung 2 und eine Einspannvorrichtung 4 zum Einspannen eines zu trennenden Rohres 6 längs einer von der Einspannvorrichtung 4 definierten Rohrlängsachse 8, während sich das abzutrennende Rohr 6 durch eine Rohraufnahmeöffnung 10 der Trennvorrichtung 2 erstreckt.

Die Rohraufnahmeöffnung 10 erstreckt sich durch ein Gehäuse 12 und einen im Gehäuse 12 radial zur Rohrlängsachse 8 verschiebbar angeordneten Schieber 14. Die Öffnungslängsrichtung 16 ist parallel zur Rohrlängsachse 8. Die Öffnungslängsrichtung 16 ist in den Zeichnungen als Zentrumslinie der Rohraufnahmeöffnung 10 dargestellt. Diese Zentrumslinie kann axial in der Rohrlängsachse 8 oder parallel dazu angeordnet sein. Die Rohraufnahmeöffnung 10 hat einen durch das Gehäuse 12 gebildeten Bereich 10-1 und einen in dem Schieber 14 bebildeten Bereich 10-2, wobei der im Schieber 14 gebildete Bereich 10-2 durch Verschieben des Schiebers 14 relativ zu dem im Gehäuse 12 gebildeten Bereich 10-1 radial verschiebbar ist.

Das Gehäuse 12 der Trennvorrichtung 2 ist an einem Basiskörper 20 der Einspannvorrichtung 4 um die von der Einspannvorrichtung 4 definierte Rohrlängsachse 8 drehbar gelagert.

Die Einspannvorrichtung 4 hat beispielsweise die Form eines Schraubstockes, welcher zwei quer zur Rohrlängsrichtung 8 mittels einer Gewindespindel 22 bewegbare Spannbacken 24 und 26 aufweist.

Der Schieber 14 hat einen quer, vorzugsweise radial, sich zur Rohrlängsachse 8 erstreckenden Hebelarm 28, welcher als Handgriff ausgebildet oder mit mindestens einem Handgriff 30 bzw. 32 versehen ist zum Drehen der Trennvorrichtung 2 relativ zur Einspannvorrichtung 4 um die Rohrlängsachse 8 herum, während ein im Schieber 14 drehbar gelagertes Trennelement 34 in das zu trennende Rohr 6 eingreift und von einem elektrischen Motor 36 angetrieben wird. Der elektrische Motor 36 befindet sich vorzugsweise in dem Hebelarm 28.

Der elektrische Motor 36 ist beispielsweise über ein Getriebe 40 mit einem Werkzeughalter 42 in Drehantriebsverbindung. Der Werkzeughalter 42 ist beispielsweise eine Welle, welche in dem Schieber 14 drehbar gelagert ist. Die Drehachse 44 des Werkzeughalters 42 ist parallel zur Rohrlängsachse 8.

Das radiale Verstellen des Schieber 14 relativ zum Gehäuse 12, um das Trennwerkzeug 34 mit dem zu trennen Rohr 6 in Eingriff und dann wieder außer Eingriff zu bringen, kann durch eine Kurvensteuerung bewirkt werden, wie sie beispielsweise aus der CH 372 202 bekannt ist. Eine solche Kurvensteuerung kann einen parallel zur Rohrlängsachse 8 von dem Schieber 14 wegragenden Vorsprung 46 enthalten, welcher auf dem Außenumfang 47 einer Kurvenscheibe 48 aufliegt, die nicht-drehbar mit der Basis 20 der Rohreinspannvorrichtung 4 verbunden ist.

Gemäß der Erfindung ist ein Lichtstrahlgerät 50, welches eine künstliche Lichtquelle 51 enthält oder in welches eine künstliche Lichtquelle einsetzbar ist, an einer durch die Rohraufnahmeöffnung 10 entfernten Stelle an der Trennvorrichtung, vorzugsweise am Gehäuse 12, angeordnet. Das Lichtstrahlgerät 50 ist derart ausgebildet, dass es mittels der künstlichen Lichtquelle 51 einen optisch erkennbaren Lichtstrahl 52 erzeugt, welcher in einer zur Drehachse 44 des Werkzeughalters 42 radialen Ebene liegt und durch die Rohraufnahmeöffnung 10 hindurch auf die Trennkante des Trennwerkzeuges 54 gerichtet ist. Das Lichtstrahlgerät 50 ist derart angeordnet, dass der Lichtstrahl in einem von außerhalb der Trennvorrichtung 2 sichtbaren Bereich auf das abzutrennende Rohr 6 trifft und auf dem Rohr 6 eine optisch sichtbare Lichtmarkierung bildet, wenn sich das abzutrennende Rohr 6 durch die Rohraufnahmeöffnung 10 erstreckt.

Der Querschnitt des Lichtstrahles, und damit auch die Lichtmarkierung auf dem Rohr 6 können die Form eines Lichtpunktes oder eines Lichtdreieckes oder vorzugsweise eines Licht-Striches oder eine andere Form haben. Die Längsrichtung des Licht-Striches erstreckt sich vorzugsweise in Rohrumfangsrichtung rechtwinklig zur Öffnungslängsrichtung 16.

Das Lichtstrahlgerät 50 ist vorzugsweise ein Laserstrahlgerät mit einer Laserquelle 51 zur Erzeugung eines Laserlichtstrahles, welcher auf dem zu trennenden Rohr 6 die Lichtmarkierung bildet. Eine andere geeignete Lichtquelle ist beispielsweise eine LED (light emitting diode). Dies schließt nicht die Verwendung von anderen Lichtquellen aus.

Gemäß der Erfindung ist das Trennwerkzeug 34 an einer ersten Umfangsstelle der Rohraufnahmeöffnung 10, vorzugsweise an ihrem unteren Ende, angeordnet, und der Lichtauslass 56 des Lichtstrahlgerätes 50 ist auf einer dazu diametral gegenüberliegenden zweiten Umfangsstelle der Rohraufnahmeöffnung 10, vorzugsweise an ihrem oberen Ende, angeordnet. Die beiden Begriffe "oberen" und "unteren" beziehen sich auf die in den Zeichnungen dargestellte Ausgangsposition der Trennvorrichtung 2 vor und nach dem Ende eines Rohrtrennvorganges.

Dadurch ist für eine die Rohrtrennvorrichtung bedienende Person leicht sichtbar, ob sich eine auf dem Rohr 6 angebrachte, optisch sichtbare Bearbeitungs-Markierung 58, welche die Rohrtrennstelle definiert, in dem Lichtstrahl 52 und damit direkt über der Trennkante 54 des Trennwerkzeuges 34 befindet.

In Abhängigkeit davon, ob der vordere oder der hintere der beiden voneinander zu trennenden Rohrabschnitte ein bestimmtes Längenmaß haben muss, kann das Rohr derart positioniert werden, dass der Lichtstrahl 52 entweder mittig auf die Markierung 58 trifft oder direkt neben deren vorderen Rand oder direkt neben deren hinteren Rand.

## Patentansprüche

1. Rohrtrennvorrichtung, enthaltend eine Trennvorrichtung (2), welche eine Rohraufnahmeöffnung (10), einen um eine Drehachse (44) drehbar gelagerten Werkzeughalter (42) zum Halten eines Trennwerkzeuges (34) und einen elektrischen Motor (36) zum Drehantrieb des Werkzeughalters (42) aufweist, wobei die Drehachse (44) des Werkzeughalters (42) und die Öffnungslängsrichtung (16) parallel zueinander angeordnet sind; **dadurch gekennzeichnet, dass** ein Lichtstrahlgerät (50) zur Erzeugung eines optisch erkennbaren Lichtstrahles (52) an einer von dem Werkzeughalter (42) entfernten Stelle an der Trennvorrichtung (2) derart angeordnet ist, dass der Lichtstrahl (52) in einer zur Drehachse (44) des Werkzeughalters (42) radialen Ebene liegt, in welcher auch die Trennkante (54) des Trennwerkzeuges (34) liegt, und der Lichtstrahl (52) in einem von außerhalb der Rohrtrennvorrichtung sichtbaren Bereich auf ein abzutrennendes Rohr (6) trifft und auf dem Rohr (6) eine optisch sichtbare Lichtmarkierung (58) bildet, wenn sich ein abzutrennendes Rohr (6) durch die Rohraufnahmeöffnung (10) hindurch erstreckt,
wobei das Trennwerkzeug (34) an einer ersten Umfangstelle der Rohraufnahmeöffnung (10) angeordnet ist und dass der Lichtauslass (56) des Lichtstrahlgerätes (50) auf einer dazu diametral gegenüberliegenden zweiten Umfangstelle der Rohraufnahmeöffnung (10) angeordnet ist.

2. Rohrtrennvorrichtung nach Anspruch 1,
**gekennzeichnet durch**
eine Einspannvorrichtung (4) zum Einspannen eines abzutrennenden Rohres (6), welche die Position und die Richtung der Rohrlängsachse (8) des abzutrennenden Rohres definiert, die parallel zur Drehachse (44) des Werkzeughalters (42) ist, und wobei die Trennvorrichtung (2) an der Einspannvorrichtung (4) um die Rohrlängsachse (8) drehbar gelagert ist.

3. Rohrtrennvorrichtung nach Anspruch 2,
**dadurch gekennzeichnet,**
**dass** die Einspannvorrichtung (4) am oder nach dem einen axialen Ende und das Lichtstrahlgerät (50) an oder nach dem betreffenden anderen axialen Ende der Rohraufnahmeöffnung (10) angeordnet ist.

4. Rohrtrennvorrichtung nach einem der vorhergehenden Ansprüche,
**dadurch gekennzeichnet,**
**dass** die Tennvorrichtung (2) einen radial von der Öffnungslängsrichtung (16) weg ragenden Hebelarm (28) und an dem radial entfernten Hebelarmende mindestens einen Handgriff (30, 32) aufweist.

5. Rohrtrennvorrichtung nach Anspruch 4,
**dadurch gekennzeichnet,**
**dass** Hebelarm (28) den elektrischen Motor (36) enthält.

6. Rohrtrennvorrichtung nach einem der vorhergehenden Ansprüche,
**dadurch gekennzeichnet,**
**dass** das Lichtstrahlgerät (50) ein Laserstrahlgerät ist.

7. Rohrtrennvorrichtung nach einem der Ansprüche 1 bis 5,
**dadurch gekennzeichnet,**
**dass** das Lichtstrahlgerät (50) für eine LED (light emitting diode) als Lichtquelle zur Erzeugung des Lichtstrahles ausgebildet ist oder eine LED enthält.

8. Rohrtrennvorrichtung nach einem der vorhergehenden Ansprüche,
**dadurch gekennzeichnet,**
**dass** der Querschnitt des Lichtstrahles und damit auch die Lichtmarkierung die Form eines Punktes oder eines Striches hat.

## Claims

1. Pipe cutting apparatus, containing a cutting device (2) which has a pipe-locating opening (10), a tool holder (42) rotatably mounted about a rotation axis (44) for holding a cutting tool (34), and an electric motor (36) for the rotary drive of the tool holder (42), the rotation axis (44) of the tool holder (42) and the opening longitudinal direction (16) being arranged parallel to one another,
**characterized in that** a light-beam unit (50) for generating an optically detectable light beam (52) is arranged at a point on the cutting device (2) remote from the tool holder (42) in such a way that the light beam (52) lies in a radial plane relative to the rotation axis (44) of the tool holder (42), in which plane the cutting edge (54) of the cutting tool (34) also lies, and the light beam (52) strikes a pipe (6), to be cut off, in a region visible from outside the pipe cutting apparatus and forms an optically visible light mark (58) on the pipe (6), when a pipe (6) to be cut off extends through the pipe-locating opening (10) the cutting tool (34) being arranged at a first circumferential point of the pipe-locating opening (10), and **in that** the light outlet (56) of the light-beam unit (50) is arranged at a second circumferential point, diametrically opposite said first circumferential point, of the pipe-locating opening (10).

2. Pipe cutting apparatus according to Claim 1, **characterized by** a clamping device (4) for clamping a pipe (6) to be cut off, which clamping device (4) defines the position and the direction of the pipe longitudinal axis (8) of the pipe to be cut off, said pipe longitudinal axis (8) being parallel to the rotation axis (44) of the tool holder (42), and the cutting device (2) being mounted on the clamping device (4) such as to be rotatable about the pipe longitudinal axis (8).

3. Pipe cutting apparatus according to Claim 2, **characterized in that** the clamping device (4) is arranged at or after the one axial end of the pipe-locating opening (10) and the light-beam unit (50) is arranged at or after the relevant other axial end of the pipe-locating opening (10).

4. Pipe cutting apparatus according to one of the preceding claims, **characterized in that** the cutting device (2) has a lever arm (28) projecting radially away from the opening longitudinal direction (16) and at least one handle (30, 32) on the radially remote lever-arm end.

5. Pipe cutting apparatus according to Claim 4, **characterized in that** the lever arm (28) contains the electric motor (36).

6. Pipe cutting apparatus according to one of the preceding claims, **characterized in that** the light-beam unit (50) is a laser-beam unit.

7. Pipe cutting apparatus according to one of Claims 1 to 5, **characterized in that** the light-beam unit (50) is designed for an LED (light emitting diode) as a light source for generating the light beam, or contains an LED.

8. Pipe cutting apparatus according to one of the preceding claims, **characterized in that** the cross section of the light beam and thus also the light mark have the form of a spot or a line.

## Revendications

1. Dispositif de sectionnement de tuyau, contenant un dispositif de sectionnement (2) qui présente une ouverture de réception de tuyau (10), un porte-outil (42) monté à rotation autour d'un axe de rotation (44) pour retenir un outil de sectionnement (34) et un moteur électrique (36) pour l'entraînement en rotation du porte-outil (42), l'axe de rotation (44) du porte-outil (42) et la direction longitudinale d'ouverture (16) étant disposés parallèlement l'un à l'autre ; **caractérisé en ce qu'**un appareil à faisceau lumineux (50) destiné à produire un faisceau lumineux détectable optiquement (52) est disposé à un endroit éloigné du porte-outil (42) sur le dispositif de sectionnement (2) de telle sorte que le faisceau lumineux (52) se situe dans un plan radial par rapport à l'axe de rotation (44) du porte-outil (42), dans lequel se situe aussi l'arête de sectionnement (54) de l'outil de sectionnement (34), et le faisceau lumineux (52) tombant sur un tuyau (6) à sectionner dans une région visible depuis l'extérieur du dispositif de sectionnement de tuyau et formant sur le tuyau (6) un marquage lumineux visible optiquement (58), lorsqu'un tuyau (6) à sectionner s'étend à travers l'ouverture de réception de tuyau (10),
l'outil de sectionnement (34) étant disposé en un premier emplacement périphérique de l'ouverture de réception de tuyau (10), et **en ce que** la sortie de lumière (56) de l'appareil à faisceau lumineux (50) est disposée sur un deuxième emplacement périphérique de l'ouverture de réception de tuyau (10) opposé diamétralement au premier emplacement périphérique.

2. Dispositif de sectionnement de tuyau selon la revendication 1,
**caractérisé par**
un dispositif de serrage (4) pour serrer un tuyau à sectionner (6), qui définit la position et la direction de l'axe longitudinal (8) du tuyau à sectionner, qui est parallèle à l'axe de rotation (44) du porte-outil (42), et le dispositif de sectionnement (2) étant monté à rotation sur le dispositif de serrage (4) autour de l'axe longitudinal du tuyau (8).

3. Dispositif de sectionnement de tuyau selon la revendication 2,
**caractérisé en ce que**
le dispositif de serrage (4) est disposé sur ou derrière l'une des extrémités axiales et l'appareil à faisceau lumineux (50) est disposé sur ou derrière l'autre extrémité axiale concernée de l'ouverture de réception de tuyau (10).

4. Dispositif de sectionnement de tuyau selon l'une quelconque des revendications précédentes,
**caractérisé en ce que**
le dispositif de sectionnement (2) présente un bras de levier (28) saillant radialement depuis la direction longitudinale d'ouverture (16) et au moins une poignée (30, 32) sur l'extrémité du bras de levier radialement éloignée.

5. Dispositif de sectionnement de tuyau selon la revendication 4,
**caractérisé en ce que**
le bras de levier (28) contient le moteur électrique (36).

6. Dispositif de sectionnement de tuyau selon l'une quelconque des revendications précédentes,
**caractérisé en ce que**
l'appareil à faisceau lumineux (50) est un appareil à faisceau laser.

7. Dispositif de sectionnement de tuyau selon l'une quelconque des revendications 1 à 5,
**caractérisé en ce que**
l'appareil à faisceau lumineux (50) est réalisé pour une DEL (diode électroluminescente) sous forme de source de lumière pour produire le faisceau lumineux ou contient une DEL.

8. Dispositif de sectionnement de tuyau selon l'une quelconque des revendications précédentes,
**caractérisé en ce que**
la section transversale du faisceau lumineux et donc aussi le marquage lumineux a la forme d'un point ou d'un trait.
